Europäisches Patentamt

European Patent Office

Office européen des brevets

(19)

(11) Veröffentlichungsnummer: **0 109 545**
**B1**

(12) **EUROPÄISCHE PATENTSCHRIFT**

(45) Veröffentlichungstag der Patentschrift:
18.01.89

(51) Int. Cl.⁴: **F 02 P 5/04**

(21) Anmeldenummer: 83110297.5

(22) Anmeldetag: 15.10.83

(54) Einrichtung zum Dämpfen von Ruckelschwingungen bei einer Brennkraftmaschine in einem Kraftfahrzeug.

(30) Priorität: 23.11.82 DE 3243235

(43) Veröffentlichungstag der Anmeldung:
30.05.84 Patentblatt 84/22

(45) Bekanntmachung des Hinweises auf die Patenterteilung:
18.01.89 Patentblatt 89/3

(84) Benannte Vertragsstaaten:
DE FR GB

(56) Entgegenhaltungen:
DE-A- 2 510 526
DE-A- 2 906 782
DE-B- 1 125 230
FR-A- 2 223 559
FR-A- 2 472 221
FR-A- 2 485 093
US-A- 4 197 767
US-A- 4 389 992

(73) Patentinhaber: ROBERT BOSCH GMBH, Postfach 50,
D-7000 Stuttgart 1 (DE)

(72) Erfinder: Däumer, Rolf, Ing. grad., Bleichstrasse 18,
D-7252 Weil der Stadt 2 (DE)
Erfinder: Feldmann, Ekkehard, Münchinger Strasse 24,
D-7251 Hemmingen (DE)
Erfinder: Person, Martin, Dipl.-Ing., A.-Lämmle-strasse 7,
D-7141 Oberriexingen (DE)
Erfinder: Wild, Ernst, Dipl.-Ing., Haldenstrasse 23,
D-7251 Weissach-Flacht (DE)
Erfinder: Zechnall, Martin, Dr. Dipl.-Ing., Holdergasse 26,
D-7141 Schwieberdingen (DE)

ACTORUM AG

## Beschreibung

### Stand der Technik

Die Erfindung betrifft eine Einrichtung zum Dämpfen von vorzugsweise niederfrequenten Ruckelschwingungen bei einer Brennkraftmaschine nach der Gattung des Hauptanspruchs. Eine solche Einrichtung ist aus der DE-OS 2 906 782 (US-PS 4 345 559) bekannt. Dort erfolgt ein mit den Ruckelschwingungen synchroner Eingriff auf das Luft-Kraftstoff-Gemisch, wodurch den Ruckelschwingungen entgegengesteuert wird. Dieses Verfahren hat den Nachteil, dass die Veränderung der Kraftstoffzugabe und deren Auswirkung auf das Drehmoment, bzw. die Drehzahl der Brennkraftmaschine sehr träge und daher nur schwer mit zufriedenstellender Wirkung realisierbar ist. Darüber hinaus ergeben sich Nachteile durch Abgasverschlechterung und Kraftstoffverbrauchserhöhung. Zusätzlich lässt sich über die Einspritzung nur in geringen Grenzen das Drehmoment des Motors beeinflussen, ohne dass durch diesen Eingriff selbst Ruckelschwingungen angeregt werden (Magerbetrieb, Abschalten eines Einspritz-Ventils).

Weiterhin ist aus der DE-OS 2 510 526 (US-PS 4 178 891) eine Einrichtung zum Dämpfen von Ruckelschwingungen bekannt, bei der neben dem Eingriff auf das Kraftstoff-Luft-Gemisch noch ein Eingriff auf den Zündwinkel vorgenommen wird. Diese Verstellung erfolgt jedoch unabhängig von der Frequenz des Ruckelns einseitig in Richtung später Zündwinkel, wodurch sich um einen eine Drehmomentverschlechterung ergibt und zum anderen die Dämpfungswirkung nicht an die Bedürfnisse einer aktiven Gegensteuerung (wechselweise Rücknahme und Zunahme des Drehmomentes im Gegentakt zur Ruckelschwingung) angepasst werden kann.

### Vorteile der Erfindung

Die erfindungsgemässe Einrichtung mit den kennzeichnenden Merkmalen des Hauptanspruchs hat demgegenüber den Vorteil, dass mit einfachen Mitteln eine sehr schnelle und wirkungsvolle Gegensteuerung zu den Ruckelschwingungen ergibt. Diese Gegensteuerung passt sich den Ruckelschwingungen vollständig an und führt daher zu einer sehr schnellen Dämpfung, wobei sich weder eine spürbare Abgasverschlechterung noch eine Verbrauchserhöhung ergibt. Die Beeinflussung über die Zündung ermöglicht eine kontinuierliche, weiche Drehmomentensteuerung, ohne den Verbrennungsablauf ungünstig zu beeinflussen.

Durch die in den Unteransprüchen aufgeführten Massnahmen sind vorteilhafte Weiterbildungen und Verbesserungen der im Hauptanspruch angegebenen Einrichtung möglich. Besonders vorteilhaft ist die Ruckelerfassung durch Differenzbildung zwischen dem momentanen Drehzahlsignal und dem über einen Tiefpass geleiteten Drehzahlsignal. Das Differenzsignal steuert dann direkt die Richtung der Zündzeitpunktverschiebung. Durch Beeinflussung der Zeitkonstanten des Tiefpasses durch Parameter der Brennkraftmaschine kann eine optimale Anpassung der Zündzeitpunktgegensteuerung erreicht werden.

Neben der dynamischen Massnahme gegen Ruckeln durch synchrone Zündzeitpunktverschiebung und die dadurch erzielbare Drehmomentvariation ist es besonders vorteilhaft, zusätzlich passive Massnahmen zu ergreifen, wobei insbesondere das der Zündanlage und/oder der Kraftstoffeinspritzanlage zugeführte Lastsignal und/oder Drehzahlsignal über einen weiteren Tiefpass geführt werden. Dies geschieht vorzugsweise durch geeignete Mittelwertbildung und/oder Filterung der durch die Ruckelschwingungen beeinflussten Parameter, wobei die Zeitkonstante auf die Ruckelschwingungen angepasst ist. Dadurch wird vermieden, dass über die Steuerparameter bereits primär ein Einfluss der Ruckelschwingungen bei der Bildung der Einspritz- und Zünd-Daten zustande kommt.

### Zeichnung

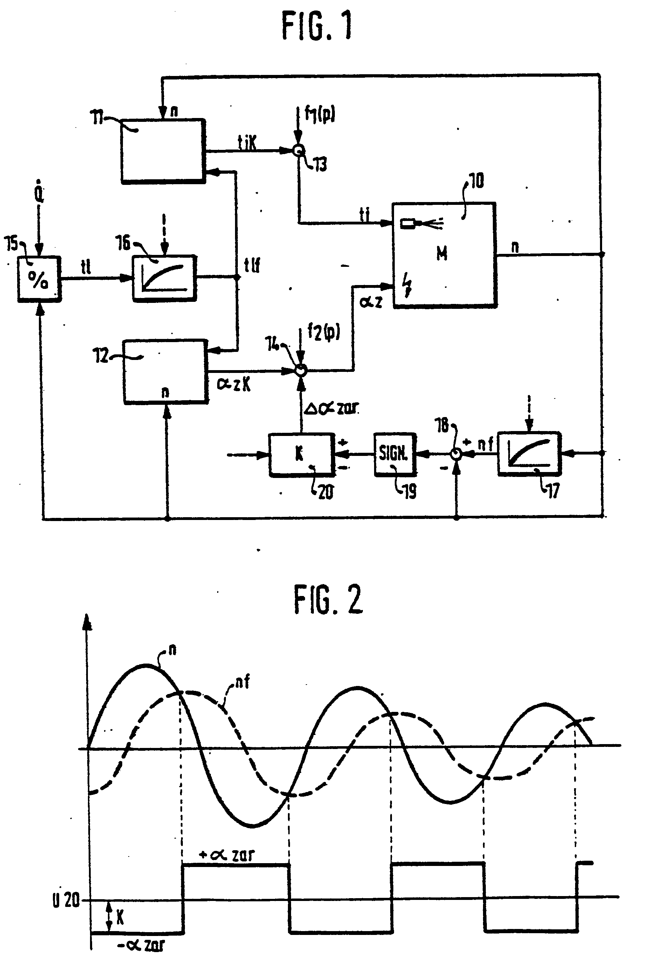

Ein Ausführungsbeispiel der Erfindung ist in der Zeichnung dargestellt und in der nachfolgenden Beschreibung näher erläutert. Es zeigen Figur 1 ein Blockschaltbild des Ausführungsbeispiels und Figur 2 ein Signaldiagramm zur Erläuterung der Wirkungsweise.

### Beschreibung des Ausführungsbeispiels

Die Brennkraftmaschine mit Antriebsstrang und Antriebsrädern eines Fahrzeugs stellen aufgrund ihrer elastischen Eigenschaften ein schwingfähiges Gebilde dar, das bei Störeinflüssen, z.B. infolge eines Kraftstoffschubs, einer verschleppten Verbrennung, oder aufgrund eines von aussen verursachten Momentensprungs (Schlagloch oder Rillen auf der Fahrbahn) zu mehr oder weniger gedämpften Schwingungen angeregt werden kann. Diese Schwingungen liegen in der Regel in einem Frequenzbereich zwischen 2 und 8 Hz und werden als Ruckeln empfunden. Diese Frequenz ist durch das oben bereits erwähnte schwingungsfähige System «Motor-Triebstrang-Reifen-Kraftfahrzeug» gegeben. Die Anregung der Ruckelschwingungen kommt durch zeitlich streuende Drehmomenterzeugung des Motors oder durch unterschiedliche Widerstandsmomente des angetriebenen Fahrzeugs zustande. Verschiedene Methoden zur Ruckelerfassung sind aus dem eingangs angegebenen Stand der Technik bekannt.

In Figur 1 ist eine Brennkraftmaschine 10 dargestellt, deren Kraftstoffeinspritzung (Signal $t_i$) und Zündzeitpunktverstellung (Signal $\alpha_z$) durch einen kennfeldgesteuerten Rechner bewirkt wird. Dabei ist das Kennfeld mit den Kraftstoffeinspritzdaten im Einspritzrechner 11 und das Kennfeld mit den Zündwinkeldaten im Zündungsrechner 12 abgelegt. Diese beiden Rechner 11, 12 sowie gegebenenfalls weitere in Figur 1 dargestellte Baugruppen können natürlich in einem einzigen Rechner zusammengefasst sein. Eine kennfeldgesteuerte Kraftstoffeinspritzung und Zündzeitpunktverstellung ist beispielsweise aus der DE-OS 2 850 534 (US-PS 4 250 858) bekannt und darüber hinaus in BMW-Fahrzeugen seit dem Jahre 1978 realisiert. Die kennfeldabhängigen Ausgangswerte für die Einspritzung $t_{ik}$ und für die Zündung $\alpha_{zk}$ werden in Korrekturstufen 13, 14 noch mit Korrekturfunktionen f1 (p) und f2 (p) in Abhängigkeit von Parametern beaufschlagt. Diese Beeinflussung der Ausgangssignale kann additiv oder multiplikativ erfolgen. Hier sind insbesondere Korrekturfunktionen wie Temperaturkompensationen, Startanreicherung, Beschleunigungsanreicherung, Schubabschaltung, Druckfunktionen usw. angesprochen, die in an sich bekannter Weise in die Einspritzung und Zündung eingreifen. Daraus ergibt sich ein korrigiertes Steuersignal für die Einspritzung ti und ein korrigiertes Steuersignal für die Zündung $\alpha_z$.

Die Brennkraftmaschine 10 erzeugt ausgangsseitig ein treibendes Drehmoment, das sich bei konstanter Drehzahl mit den Widerstandsmomenten des Fahrzeugs (Luftwiderstand, Reibwiderstand der Reifen, des Getriebes, der angetriebenen Aggregate und der Lager sowie Beschleunigungswiderstand) im Gleichgewicht befindet. Wird entweder das antreibende Drehmoment des Motors oder eines der Widerstandsmomente des Fahrzeugs verändert, so erfolgt entsprechend den Bewegungsgleichungen der Mechanik eine Veränderung der Motordrehzahl, bis durch Erhöhen oder Absenken der drehzahlabhängigen Widerstandsmomente erneut ein Momentengleichgewicht erreicht ist. Da der Hauptteil der Widerstandsmomente an den Antriebsrädern auftritt, ist die jeweilige Motordrehzahl, der ein Momentengleichgewicht entspricht, von Getriebe- und Hinterachsübersetzung abhängig.

Der ermittelte Ausgangsdrehzahlwert n wird sowohl dem Einspritzrechner 11, wie auch dem Zündungsrechner 12 zugeführt. Weiterhin wird dieses Drehzahlsignal n einer Divisionsstufe 15 zugeführt, der zusätzlich ein Luftdurchflusssignal Q zugeführt ist. Durch Division wird ein Leitsignal $t_l$ = Q/n gebildet, das über einen Tiefpass 16 den beiden Rechnern 11, 12 als Lastsignal zugeführt wird.

Schliesslich wird das Drehzahlsignal n einmal direkt und einmal über einen weiteren Tiefpass 17 einer Vergleichsstufe 18 zugeführt, deren Differenzsignal über eine Vorzeichen-Bildungsstufe 19 einer Ruckelkorrekturstufe 20 zugeführt ist. Deren Ausgangssignal wirkt auf die Korrekturstufe 14 ein.

Zunächst soll anhand von Figur 2 die dynamische Zündwinkelbeeinflussung zur aktiven Dämpfung der Ruckelerscheinung erläutert werden. Die Ruckelschwingung äussert sich als Drehzahlschwingung der Drehzahl n. Durch den Tiefpass 17 wird die Drehzahlschwingung n in eine Schwingung nf umgewandelt. Durch Differenzbildung der beiden Signalfolgen n und nf erhält man am Ausgang der Vorzeichenbildungsstufe 19 ein ständig wechselndes Vorzeichen, das sich entsprechend der Signalfolge U20 ändert. Die Vergleichsstufe 18 zusammen mit der Vorzeichen-Bildungsstufe 19 können z. B. als Komparator ausgebildet sein. Das wechselnde Vorzeichen bewertet nun den Faktor K in der Ruckelkorrekturstufe 20, wodurch sich eine wechselnde Zündverstellung nach früh und spät gemäss der Signalfolge U20 ergibt. Diese wechselnde Zündverstellung wird dem Zündwinkel $\alpha_{zk}$ aus dem Kennfeld zusammen mit eventuellen weiteren Korrekturfunktionen f2 (p) überlagert, wodurch sich ein gesamter Zündwinkel $\alpha_z$ ergibt. Dieser wechselnde Zündwinkel wirkt somit der Ruckelschwingung entgegen, d.h., bei Drehzahlerhöhung erfolgt eine Momentenrücknahme durch Spätverstellung und bei Drehzahlabsinken ein Momentenzuwachs durch Frühverstellung. Liegt kein Ruckeln vor, so ist das Ausgangssignal der Ruckelkorrekturstufe 20 gleich Null. Die Ruckelschwingung wird durch diese Massnahme bei geeigneter Wahl des Faktors K bereits im Keim gedämpft.

Dieser Faktor K kann im einfachsten Fall konstant sein. Eine weitere Möglichkeit besteht in der Wahl zweier Faktoren K, wobei der eine bei der Verstellung nach früh und der andere bei der Verstellung nach spät wirksam wird. Da der Momentenverlauf in Abhängigkeit vom Zündwinkel nicht linear ist, kann auf diese Weise je nach Arbeitspunkt ein Ausgleich geschaffen werden. Schliesslich kann eine noch feinere Anpassung dadurch erreicht werden, dass der Faktor K in Abhängigkeit von Parametern der Brennkraftmaschine, wie z.B. der Drehzahl, der Temperatur und der Last einer vorgebbaren Funktion gesteuert wird. Auf diese Weise kann die aktive Ruckeldämpfung durch Zündungsgegensteuerung optimiert werden. Diese Variation ist durch den unterbrochenen Pfeil dargestellt.

Neben dem Betrag der Korrekturzündwinkel $\Delta\alpha_{zar}$ zur Ruckelgegensteuerung kann auch der Zeitpunkt des Wechsels zwischen Früh- und Spätverstellung durch Variation der Zeitkonstanten des Tiefpasses 17 optimiert werden. Dies ist ebenfalls durch einen unterbrochenen Pfeil dargestellt.

Neben der beschriebenen aktiven Dämpfung der Ruckelerscheinungen kann noch zusätzlich eine passive Dämpfung vorgesehen werden. Da die Dauer der Einspritzung und der Zündwinkel direkt von der gemessenen Drehzahl, bzw. Last abhängen, diese Grössen jedoch selbst mit der Frequenz der Ruckelschwingung bei angeregtem System «Motor . . .» ihren Wert dynamisch ändern, kann eine Rückkopplung erfolgen, durch die bei geeigneter Phasenlage die Ruckelschwingung selbst angeregt bzw. verstärkt wird. Zur Bildung des Lastsignals für die Rechner 11, 12 wird daher das zunächst gebildete Lastsignal $t_l$ im Tiefpass 16 gefiltert. Dies geschieht vorzugsweise durch geeignete Mittelwertbildung, wobei die Zeitkonstante auf die Ruckelschwingung angepasst wird. Durch Filterung mit Tiefpasscharakter wird ein korrigiertes Lastsignal $t_{lf}$ zur Verarbeitung den Rechnern 11, 12 zugeführt. Auch hier kann wiederum durch parameterabhängige Beeinflussung der Zeitkonstante des Tiefpasses eine Optimierung erfolgen. Weiterhin ist es möglich, das Drehzahlsignal n selbst ebenfalls durch einen Tiefpass zu filtern.

Es sei noch festgehalten, dass anstelle der Rukkelerfassung durch Vergleich des Drehzahlsignals mit einem über einen Tiefpass gefilterten Drehzahlsignal auch der Vergleich des Drehzahlsignals mit einem gemittelten Drehzahlsignal treten kann.

Oberhalb einer festlegbaren Last bzw. oberhalb einer vorgebbaren Drehzahl werden vorteilhaft die Antiruckelmassnahmen durch Beeinflussung von Zündung und Einspritzung unwirksam gemacht, da zum einen in diesen Bereichen gewöhnlich kein Ruckeln mehr auftritt und zum anderen unerwünschte Beeinflussungen, insbesondere bei starken Beschleunigungsvorgängen, vermieden werden.

Die beschriebenen Massnahmen zur Vermeidung von Ruckeln können natürlich in beliebiger Weise mit bekannten Anti-Ruckel-Massnahmen kombiniert werden. Dies betrifft insbesondere auch diejenigen Massnahmen, die im eingangs angegebenen Stand der Technik beschrieben sind.

## Patentansprüche

1. Einrichtung zum Dämpfen von niederfrequenten Ruckelschwingungen bei einer Brennkraftmaschine (10) mit einem Aufnehmer für ein Drehzahlsignal (n) und mit Mitteln (12) zur Beeinflussung wenigstens einer Steuergrösse der Brennkraftmaschine, dadurch gekennzeichnet, dass das Drehzahlsignal einem Filter (17) mit Tiefpasscharakter zugeführt ist, dass das Ausgangssignal des Filters (nf) mit dem aktuellen Drehzahlsignal (n) verglichen wird, dass das gewonnene Ausgangssignal zur Beeinflussung des Zündwinkels ($\alpha_z$) (Winkellage des Zündzeitpunkts) der Zündanlage der Brennkraftmaschine dient und dass das Vorzeichen des aus dem Vergleich gewonnenen Ausgangssignals die Richtung der Zündzeitpunktverschiebung vorgibt.

2. Einrichtung nach Anspruch 1, dadurch gekennzeichnet, dass die Beeinflussung des Zündwinkels in Abhängigkeit von Parametern der Brennkraftmaschine (z.B. Drehzahl, Last, Temperatur) variierbar ist.

3. Einrichtung nach Anspruch 1, dadurch gekennzeichnet, dass der Zündwinkel ($\Delta_z$) um einen konstanten Korrekturzündwinkel ($\Delta\alpha_{zar}$) von seinem ursprünglichen Zündwinkel ($\alpha_{zk}$) verstellt wird.

4. Einrichtung nach einem der vorhergehenden Ansprüche, dadurch gekennzeichnet, dass für die eine der Verschiebrichtungen eine andere Beeinflussung oder ein anderer Korrekturzündwinkel ($\Delta\alpha_{zar}$) als für die andere Verschieberichtung vorgesehen ist.

5. Einrichtung nach einem der vorhergehbaren Ansprüche, dadurch gekennzeichnet, dass die Parameter des Filters (17) durch Parameter der Brennkraftmaschine und/oder des Antriebsstranges steuerbar sind.

6. Einrichtung nach einem der vorhergehenden Ansprüche, dadurch gekennzeichnet, dass ein der Zündanlage und/oder Kraftstoffeinspritzanlage zugeführtes Lastsignal (t1) und/oder Drehzahlsignal (n) über einen weiteren Tiefpass (16) geführt ist.

7. Einrichtung nach Anspruch 6, dadurch gekennzeichnet, dass die Zeitkonstante des weiteren Tiefpasses (16) durch Parameter der Brennkraftmaschine steuerbar ist.

8. Einrichtung nach einem der vorhergehenden Ansprüche, dadurch gekennzeichnet, dass oberhalb einer vorgebbaren Last und/oder Drehzahl die Beeinflussung von Zündung und/oder Einspritzung durch Antiruckelmassnahmen abschaltbar ist.

## Claims

1. Device for the damping of low-frequency juddering vibrations of an internal-combustion engine (10) with a pick-up for a speed signal (n) and with means (12) for influencing at least one control variable of the internal-combustion engine, characterized in that the speed signal is fed to a filter (17) with low-pass character, in that the output signal of the filter (nf) is compared with the current speed signal (n), in that the output signal obtained is used to influence the ignition angle ($\alpha_z$) (angular position of the ignition point in time) of the ignition system of the internal-combustion engine, and in that the sign of the output signal obtained from the comparison predetermines the direction of the ignition timing displacement.

2. Device according to Claim 1, characterized in that the influencing of the ignition angle is variable, dependent on the parameters of the internal-combustion engine (for example speed, load, temperature).

3. Device according to Claim 1, characterized in that the ignition angle ($\alpha_z$) is adjusted by a constant correction ignition angle ($\Delta\alpha_{zar}$) from its original ignition angle ($\alpha_{zk}$).

4. Device according to one of the preceding claims, characterized in that a different influencing or a different correction ignition angle ($\Delta\alpha_{zar}$) is provided for the one of the displacement directions than for the other displacement direction.

5. Device according to one of the precedable [sic] claims, characterized in that the parameters of the filter (17) can be controlled by parameters of the internal-combustion engine and/or of the drive line.

6. Device according to one of the preceding claims, characterized in that a load signal (t1) and/or speed signal (n), fed to the ignition system and/or fuel injection system, is led via a further low-pass filter (16).

7. Device according to Claim 6, characterized in that the time constant of the further low-pass filter (16) can be controlled by parameters of the internal-combustion engine.

8. Device according to one of the preceding claims, characterized in that, above a predeterminable load and/or speed, the influencing of ignition and/or injection by anti-juddering measures can be cut out.

## Revendications

1. Dispositif d'amortissement des irrégularités de marche à basse fréquence sur une machine à combustion interne (10) avec un capteur de signal de vitesse de rotation (n) et des moyens (12) d'agir au moins sur une grandeur de commande de la machine à combustion interne, caractérisé en ce que le signal de vitesse de rotation est envoyé à un filtre (17) à caractéristique passe-bas, que le signal de sortie du filtre (nf) est composé avec le signal de vitesse de rotation du moment, que le signal de sortie obtenu pour agir sur l'angle d'allumage ($\alpha_z$) (position angulaire de l'instant d'allumage) sert au dispositif d'allumage de la machine à combustion interne et que le signe du signal de sortie obtenu à partir de la comparaison prédétermine le sens du décalage de l'instant d'allumage.

2. Dispositif suivant la revendication 1, caractérisé en ce que l'action sur l'angle d'allumage peut varier en fonction de paramètres de la machine à combustion interne (par exemple vitesse de rotation, charge, température).

3. Dispositif suivant la revendication 1, caractérisé en ce que l'angle d'allumage ($\alpha_z$) est corrigé d'une correction d'angle d'allumage ($\Delta\alpha_{zar}$) constante, à partir de sa valeur d'origine ($\alpha_{zk}$).

4. Dispositif suivant l'une des revendications 1 à 3, caractérisé en ce qu'il est prévu, pour l'un des sens de décalage, une action ou une correction d'angle d'allumage ($\Delta\alpha_{zar}$) différente de ce qui est prévu pour le décalage dans l'autre sens.

5. Dispositif suivant l'une des revendications 1 à 4, caractérisé en ce que les paramètres du filtre (17) peuvent être pilotés par des paramètres de la machine à combustion interne et/ou de la barre de transmission.

6. Dispositif suivant l'une des revendications 1 à 5, caractérisé en ce qu'un signal de charge ($t_l$) et/ou signal de vitesse de rotation (n) envoyé au dispositif d'allumage et/ou au dispositif d'injection de carburant passe à travers un autre filtre passe-bas (16).

7. Dispositif suivant la revendication 6, caractérisé en ce que la constante de temps de l'autre filtre passe-bas (16) peut être pilotée par des paramètres de la machine à combustion interne.

8. Dispositif suivant l'une des revendications 1 à 7, caractérisé en ce que l'action sur l'allumage et/ou l'injection par des mesures contre les à-coups, peut être inhibée au-dessus d'une charge et/ou d'une vitesse de rotation à donner à l'avance.

# FIG. 1

# FIG. 2